# FASCICULE DE BREVET EUROPEEN

(11) **EP 2 640 892 B1**
(45) Date de publication et mention de la délivrance du brevet: **10.08.2016**
(21) Numéro de dépôt: 11799834.4
(22) Date de dépôt: 14.11.2011
(51) Int. Cl.: D21H 17/34, D21H 17/37, D21H 17/57, D21H 21/18, D21H 27/10, B65D 55/00, B65D 65/14, B65D 65/38, B65D 65/40, B65D 65/42, C08J 5/02, C08J 5/12, C08J 5/18, C08L 75/04

(54) **MATÉRIAU FIBREUX D'EMBALLAGE THERMOSCELLANT ADAPTÉ À L'USAGE MÉDICAL**
FASERIGES HEISSSIEGELBARES VERPACKUNGSMATERIAL FÜR MEDIZINISCHE VERWENDUNG
FIBROUS HEAT SEALABLE PACKAGING MATERIAL SUITABLE FOR MEDICAL USE

(30) Priorité: 15.11.2010 FR 1059373
(43) Date de publication de la demande: 25.09.2013
(73) Titulaire: Arjowiggins Healthcare, 66110 Amelie-les-Bains-Palalda (FR)
(72) Inventeur: TRIPIER, Michel, F-38500 Voiron (FR); SIMON, Christophe, F-66480 Maureillas Las Illas (FR); RICATTE, Jean-Christophe, F-66110 Amelie-les-Bains (FR)
(74) Mandataire: Nony
(86) Numéro de dépôt international: PCT/IB2011/055075
(87) Numéro de publication internationale: WO 2012/066466

(56) Documents cités:
- WO-A1-00/75210
- WO-A1-99/00244
- US-A- 5 486 570
- US-A- 6 063 498
- US-B1- 6 808 691

## Description

La présente invention concerne les matériaux poreux à propriété thermoscellante, utiles pour réaliser des emballages dans le domaine médical, en particulier résistants à une stérilisation. Ces matériaux, en particulier sous forme de films, tissus ou papiers, notamment fibreux non tissés, sont notamment utiles pour former des emballages pour instruments et appareillages médicaux requérant une stérilisation.

De tels instruments médicaux peuvent notamment être des seringues, implants, valves, kits de sutures, entre autres.

L'opération de stérilisation est typiquement effectuée lorsque les instruments médicaux sont encore dans l'emballage, de sorte que lesdits instruments sont conservés stériles jusqu'à ouverture. Les moyens de stérilisation communément employés sont l'irradiation gamma, ou l'emploi d'oxyde d'éthylène gazeux, de vapeur d'eau ou de vapeur de formaldéhyde qui passent à travers les pores du matériau pour assurer la stérilisation des instruments ou prothèses contenus dans les emballages.

Les emballages d'instruments ou prothèses médicaux sont généralement formés d'une partie rigide ou pseudo rigide ou souple, pouvant prendre sensiblement la forme de l'objet médical considéré, sur laquelle un substrat thermoscellant est thermoscellé. La partie rigide ou pseudo rigide ou souple, est par exemple thermoformée. L'ouverture de ces emballages se fait habituellement au niveau du scellage.

Un tel emballage, et plus particulièrement le matériau thermoscellable servant à réaliser l'opercule, doit généralement répondre à plusieurs critères en vue de son utilisation spécifique. Ainsi, outre ses propriétés thermoscellantes, le matériau doit avantageusement être respirant, à savoir présenter la perméabilité adéquate pour permettre l'opération de stérilisation en laissant pénétrer l'agent stérilisant, comme par exemple l'oxyde d'éthylène, la vapeur d'eau ou de formaldéhyde, tout en évitant la contamination après stérilisation. Ce matériau d'emballage peut présenter les fonctions requises le rendant apte à être imprimé.

Par ailleurs, afin de permettre une ouverture aseptique, le matériau doit présenter des propriétés de résistance à la délamination lors de l'ouverture de l'emballage.

Enfin, la résistance du matériau doit être suffisante pour protéger les objets emballés, tout comme résister à toute perforation pouvant être induite par le contenu lors des phases de transport.

Il est connu de réaliser des papiers thermoscellables en enduisant hors ligne les papiers à l'aide d'un agent thermoscellable.

L'enduction hors ligne multiplie les coûts additionnels de main d'oeuvre et de stockage.

WO98/24970 décrit un emballage pelable comportant un papier renforcé thermoscellé revêtu d'une couche de matériau diélectrique formée de polymères et copolymères polyoléfiniques.

On connaît par ailleurs l'utilisation des polyuréthanes pour leurs propriétés adhésives notamment dans des laminés, par exemple par les publications EP 528 874, US 2007/0107381 ou WO99/32044 ou encore pour former des lignes de colle, y compris pour des emballages stérilisables, par exemple par WO03/086877. Le polyuréthane est également utilisé dans les applications médicales comme par exemple dans US 6,063,498.

Il existe un besoin pour bénéficier de matériaux fibreux répondant aux exigences liées à leur utilisation dans le domaine médical, pouvant être fabriqués de façon plus économique.

Un des buts de l'invention est donc de proposer un matériau fibreux d'emballage, formant une barrière sceptique convenable, thermoscellable, en particulier présentant une force de scellage acceptable après stérilisation, et présentant une résistance mécanique ainsi qu'à la délamination compatibles avec l'emballage de dispositifs médicaux.

Un autre but de l'invention est de proposer un procédé de préparation d'un tel matériau, à la fois simple et adaptable aux machines à papier existantes ou de tout autre outil de formation de voile non tissé par voie sèche ou humide.

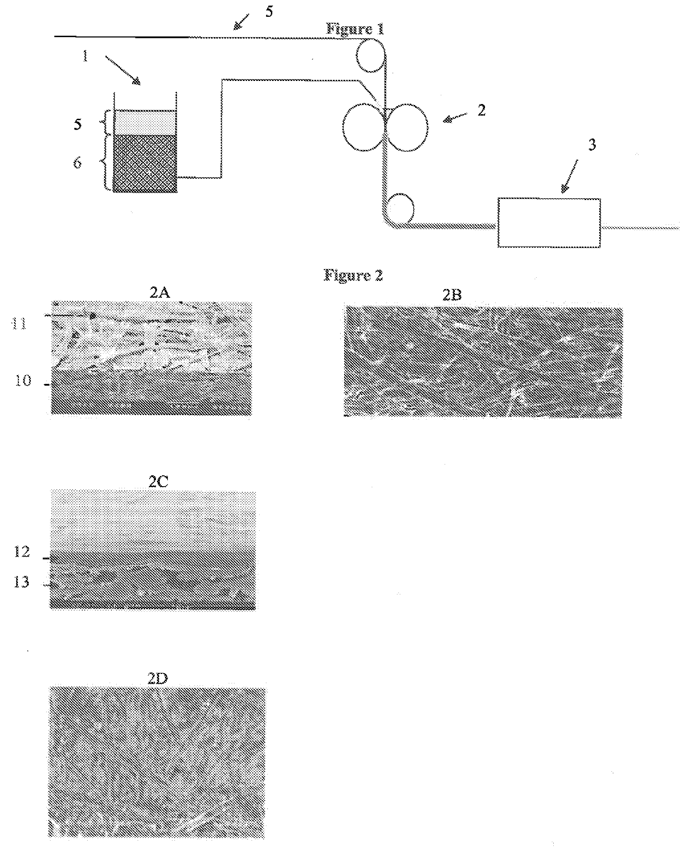

Une des difficultés réside dans le fait que les fibres en surface du matériau fibreux en contact avec la contrepartie polyoléfinique thermoscellée ne sont pas recouvertes totalement par une épaisseur de couche (voir fig 2C). La séparation, ou pelage des deux matériaux après thermoscellage se fait à l'interface même, sollicitant ainsi les fibres du matériau fibreux occasionnant une délamination du matériau fibreux proscrite pour garantir l'ouverture aseptique d'un emballage de dispositif médical (cf fig 2D).

Il existe donc un besoin de proposer une composition d'encollage capable d'offrir à la fois la fonction de renfort du matériaux fibreux pour garantir l'ouverture aseptique, la fonction de thermoscellage, tout en conservant à la fois une perméabilité à l'air suffisante pour permettre le passage de l'agent stérilisant lorsque ce dernier est gazeux (vapeur, oxyde d'éthylène, formaldéhyde) et assurant une barrière au microbes.

L'invention a donc également pour but de proposer une composition d'encollage destinée à l'obtention dudit matériau thermoscellable.

Le brevet décrit un matériau fibreux d'emballage médical thermoscellable comportant un substrat monocouche fibreux non tissé ou papier, imprégné à coeur par au moins un polyuréthane.

L'invention a pour objet, selon un de ses aspects, un matériau fibreux d'emballage médical thermoscellable selon la revendication 1. Le matériau fibreux d'emballage médical thermoscellable comporte optionnellement au moins un additif fonctionnel.

L'invention vise, selon un autre de ses aspects, un procédé de fabrication selon la revendication 15.

L'invention a également pour objet une composition selon la revendication 18.

Le brevet décrit également un matériau fibreux d'emballage médical thermoscellable, comportant un substrat monocouche fibreux, non tissé ou papier, enduit à l'aide d'une composition comportant au moins un polyuréthane et préférentiellement en outre au moins un agent tackifiant et optionnellement au moins un additif fonctionnel, notamment telle que décrite ci-après.

Le brevet décrit aussi un procédé de fabrication d'un tel matériau fibreux médical thermoscellant comportant au moins une étape d'enduction d'un substrat monocouche fibreux, non tissé ou papier, avec une composition comprenant une dispersion aqueuse d'au moins un polyuréthane et préférentiellement en outre au moins un agent tackifiant, et optionnellement au moins un additif fonctionnel.

Ainsi, le brevet décrit également un tel matériau d'emballage médical produit par un procédé hors ligne de couchage à l'aide d'une composition telle que décrite ci-après et nommée composition d'encollage.

L'invention est enfin relative à un emballage à usage médical selon la revendication 17.

Le brevet décrit également l'utilisation d'une composition d'encollage comprenant au moins un polyuréthane et au moins un agent tackifiant, et optionnellement au moins un additif fonctionnel pour imprégner un substrat monocouche fibreux non tissé, ou papier, pour lui conférer des propriétés thermoscellantes, en conservant sa perméabilité à l'air sans affecter les propriétés de barrière aux microorganismes.

L'invention permet de fournir un matériau fibreux d'emballage médical thermoscellable, présentant les propriétés requises en termes d'adhésion et de pelabilité.

En outre, l'invention permet, grâce à l'apport des propriétés adhésives en ligne, de simplifier le procédé de fabrication du matériau fibreux d'emballage par comparaison aux techniques existantes.

Par «matériau fibreux d'emballage à propriété thermoscellable», on désigne un matériau fibreux d'emballage capable de se sceller, à savoir d'adhérer avec un matériau tiers, sur lequel il aura été mis en contact pendant une durée déterminée sous l'action de la chaleur, et généralement en exerçant une pression.

Plus particulièrement, par «matériau fibreux d'emballage à propriété thermoscellable», on désigne un matériau fibreux d'emballage capable de se sceller, à savoir d'adhérer avec un matériau tiers, par action d'une température permettant d'atteindre une température à l'interface des deux matériaux supérieure à la température d'activation du polyuréthane, par exemple comprise entre 45°C et 200° et plus particulièrement comprise entre 60°C et 150°C et en exerçant une pression supérieure à 200 kPa, pendant une durée pouvant varier de 0,2 à 4 secondes. Les forces de scellage obtenues seront supérieures à 100cN/15mm, plus particulièrement supérieure à 150 cN/15mm en garantissant une ouverture aseptique.

Le matériau fibreux d'emballage selon l'invention permet d'obtenir un scellage qui résiste au mode de stérilisation choisi. La composition du matériau fibreux d'emballage pourra être adaptée à celui-ci, comme détaillé dans la suite.

Par « ouverture aseptique » ou « pelabilité », on entend qu'à l'ouverture de l'emballage au niveau du matériau thermoscellable, le matériau ne se déchire pas et ne se délamine pas, pour éviter la formation de fibres libres, particules ou autres débris, qui pollueraient l'espace de travail du praticien ; ces particules constituent en effet un vecteur de transmission des microorganismes.

Par « force de scellage » on entend la traction nécessaire à appliquer aux extrémités des deux portions thermoscellées pour les séparer l'une de l'autre. Cette force est mesurée selon l'ASTM F88 en « T-peel » à une vitesse d'élongation de 200 mm/min

Par « substrat monocouche », on entend un substrat relativement homogène dans sa composition sur son épaisseur. Un tel substrat se distingue d'un laminé constitué de différentes couches de natures différentes, superposées les unes aux autres.

Le substrat monocouche peut être monojet ou bi-jet.

Le matériau fibreux d'emballage thermoscellant est obtenu à l'aide d'un encollage à coeur du substrat monocouche.

Par « encollage ou imprégnation à coeur » on entend que la composition d'encollage s'établit en profondeur dans le substrat et se retrouve également à la surface. Ainsi, les fibres du substrat sont enrobées par la composition.

Ce traitement se distingue en particulier d'une étape de couchage où la composition de couchage vient enduire en surface un substrat, sans atteindre le coeur dudit substrat.

### SUBSTRAT MONOCOUCHE FIBREUX NON TISSE

Le substrat utile à la mise en oeuvre de la présente invention peut être tout papier ou non tissé présentant en particulier l'innocuité et les propriétés mécaniques adaptées à l'usage médical.

Cela englobe les papiers fibreux non tissés, comprenant des fibres naturelles, en particulier cellulosiques ou des fibres synthétiques ou encore un mélange de fibres naturelles et synthétiques.

Parmi les fibres naturelles, on peut citer les fibres de bois, par exemple d'eucalyptus, de résineux ou leur mélange, de coton, de bambou, de viscose, de paille, d'abaca, d'asperto, de chanvre, de jute, de lin, de sisal ou leurs mélanges.

Les fibres peuvent être blanchies, semi-blanchies ou non blanchies.

Parmi les fibres synthétiques, on peut citer les fibres de polyester, de polyamide, de rayonne et de viscose.

Typiquement, on entend, dans le cadre de la présente invention, par « fibres longues », les fibres de longueur supérieure ou égale à 0,6 mm et par fibres courtes, les fibres de longueur inférieure à 0,6 mm.

Les fibres peuvent être courtes ou longues.

Les fibres peuvent présenter une longueur moyenne comprise entre 0,1 et 30 mm, en particulier entre 1 et 15 mm.

Dans un mode de réalisation particulier, le substrat comporte au moins 5 % en poids de fibres longues, par rapport au poids du substrat.

A titre d'additif optionnel pouvant être mis en oeuvre dans le substrat fibreux, on peut citer le dioxyde titane, le carbonate de calcium, le kaolin, le talc, les amidons, les agents de collage, les pigments et agents de résistance à l'état humide.

Selon un mode de réalisation particulier, le substrat monocouche fibreux non tissé est choisi parmi les supports constitués d'un mélange de fibres de bois.

Le grammage du substrat fibreux avant encollage peut être généralement compris entre 20 et 150 g/m², et de préférence varie de 40 à 110 g/m².

Le substrat monocouche fibreux non tissé présente avantageusement une perméabilité à l'air compatible avec l'usage médical (préférentiellement une porosité Bendtsen supérieure à la limite basse décrite dans la norme 868-6:2009 de 18ml/min soit une air perméance supérieure à 0,2µm / Pa en air perméance lorsque mesuré selon L'ISO 5636-3), permettant le passage du gaz de stérilisation, par exemple l'oxyde d'éthylène, la vapeur de formaldéhyde, la vapeur d'eau et des qualités de barrière microbiologique selon les normes habituelles.

Dès lors, le substrat fibreux avant encollage ou imprégnation, pouvant être mis en oeuvre dans le cadre de la présente invention peut notamment présenter une perméabilité à l'air Bendtsen inférieure à 3000 ml/min, préférentiellement inférieure à 2700 ml/min bendsten et plus favorablement inférieure à 1875 ml/min bendsten.

Le substrat monocouche fibreux avant encollage, peut être obtenu sur une table inclinée, « former », table plate (Fourdrinier) ou forme ronde ou tout autre outil capable de former une nappe de fibres à partir de leur mélange par voie sèche comme selon les technologies « dry-laid » ou de leur mélange en suspension dans l'eau par voie humide comme selon les technologies « wet laid ». Le substrat peut être obtenu, par exemple, grâce à une suspension aqueuse en toute proportion de fibres naturelles de bois longues et/ou courtes par exemple. Ces fibres une fois mises en suspension sont préférentiellement raffinées et complétées par des adjuvants bien connus de l'homme de l'art permettant leur mise en oeuvre. En particulier, on peut faire appel à des antimousses, des liants, des pigments, charges minérales, des agents de résistance à l'état humide et de collage. Ce mélange fibreux peut être ensuite égoutté sur une toile pour aboutir à la formation d'un matelas fibreux qui est ensuite séché avant l'étape d'encollage en ligne.

### COMPOSITION D'ENCOLLAGE

En vue de répondre aux exigences d'adhésivité et de pelabilité exposées précédemment, la composition d'encollage conforme à la présente invention comprend au moins un polyuréthane, et au moins un agent tackifiant, et optionnellement au moins un additif fonctionnel. Elle peut en outre comprendre au moins un agent coliant ou agent de renfort et/ou au moins un additif fonctionnel.

### Polyuréthane

Selon un mode particulier de mise en oeuvre de l'invention, le polyuréthane est présent dans la composition d'encollage sous forme d'une dispersion aqueuse de particules de polyuréthane.

Les polyuréthanes peuvent être caractérisés par une température d'activation supérieure à 25°C, en particulier supérieure à 40°C, et préférentiellement supérieure à 60°C. Ils peuvent également se caractériser par une température de transition vitreuse ou Tg inférieure à 40 °C, préférentiellement inférieure à 20 °C, par exemple comprise entre - 85°C et 20°C, préférentiellement inférieure à 10°C, et plus préférentiellement inférieure à 0 °C.

Par « température d'activation ou T_{act} » on entend dans le cadre de la présente invention la température au-delà de laquelle les propriétés de thermoscellage se manifestent, et plus précisément la température à partir de laquelle le polyuréthane adhère au matériau en présentant une force de scellage supérieure à 60 cN/15mm.

On peut citer sans limiter la portée de l'invention : les émulsions vendues sous les dénominations CUR 21 (Tg = 0 °C), U400N (Tg = -75 °C) et U210-1VP (Tg = 0 °C) par la société Alberding-boley, mais également les dispersions vendues par la société Bayer Material Science, à savoir Dispercoll U42 (Tg = -5 °C/ T_{act} 80-100°C), U53 (Tg =-55 °C T_{act} 45-55°C), U54 (Tg = -55 °C T_{act} 45-55°C), U56 (Tg = -55 °C T_{act} 40-50°C) et enfin les émulsions Neoresine R551 et R9330 (Tg = -47 °C / T_{act} 65°C), vendues par la société DSM résine.

La taille de ces particules peut être comprise entre 50 nm et 500 nm, voire entre 100 nm et 300 nm, mesurée par observation au microscope à balayage électronique ou à l'aide d'un granulomètre couplé à un compteur laser.

Le polyuréthane peut être présent dans la composition dans une teneur comprise entre 1,5 % et 60 % en poids, en particulier entre 1,5 % et 40 % en poids, notamment entre 5% et 50 % en poids, en particulier entre 2 % et 35 %, voire 2,5 et 30 % en poids et plus particulièrement comprise entre 10 à 30 % en poids, par rapport au poids total de la composition.

### Agent coliant ou agent de renfort

La composition d'encollage peut selon un mode de réalisation de la présente invention comprendre en outre un agent coliant ou agent de renfort.

Dans le cadre de la présente invention, le terme agent coliant et agent de renfort sont considérés comme équivalents.

L'agent coliant ou de renfort a notamment pour but de renforcer le substrat fibreux. Ainsi, ledit substrat fibreux présente une consolidation telle que le délaminage, propice à la contamination de l'objet contenu dans l'emballage, est évité.

Dans le cadre de la présente invention, le renforcement du substrat fibreux peut être assuré par un latex

Le terme « latex » dans le cadre de la présente invention désigne tout polymère en émulsion en milieu aqueux.

A titre d'agent coliant ou de renfort pouvant être employé pour former le substrat fibreux renforcé, on peut notamment citer les émulsions de copolymères acryliques (tels que vinacryl^{®} 4375 de Tg = 3 °C vendu par la société Celanese), d'acétate de vinyle (tels que Acronal^{®} 500D de Tg -13 °C de BASF, Texicote^{®} 03-029 de Tg 13 °C texicryl^{®} 13-976 de Tg 5 °C vendu par la société Scott Bader) et leurs mélanges, préférentiellement d'émulsion de styrène acrylique (tels que ECO 3836 de Tg -12 °C de Rohm & Haas ou Cartacoat B600 de Tg -25 °C de Clariant et Texicryl^{®} 13976 de Tg 5° de Scott Bader) ou de styrène butadiène (XZ 94755 de Dow de Tg = -25 °C).

Il peut être caractérisé par sa température de transition vitreuse Tg inférieure à 50°C, particulièrement inférieur à 20°C et préférentiellement inférieur à 0°C.

Selon un mode de réalisation particulier, l'agent coliant ou de renfort peut être choisi parmi les styrènes acrylates, tels que par exemple l'acrylate ECO^{®} 3836 de Clariant et styrènes butadiène par exemple le XZ 94755 de Dow et d'acétate de vinyle comme par exemple l'Acronal^{®} 500D de BASF.

L'agent coliant ou de renfort peut être présent dans la composition dans une teneur en matière sèche inférieure à 50 % en poids, notamment inférieure à 35 % en poids de matière sèche et plus particulièrement inférieure à 20 % en poids, par rapport au poids total de la composition, en particulier comprise entre 1,5 et 40 % en poids, 3 à 35 % en poids, ou encore 3,5 à 30 % en poids.

### Agent tackifiant

La composition d'encollage comprend en outre au moins un agent tackifiant.

Selon un aspect particulier de l'invention, la composition d'encollage comprend au moins un polyuréthane et au moins un agent tackifiant.

L'agent tackifiant a notamment pour but d'ajuster au besoin les propriétés de thermoscellabilité du substrat en fonction de la nature de la stérilisation et de la nature de la contrepartie rigide ou semi-rigide base polyoléfiniques.

Ledit agent tackifiant peut être choisi parmi les copolymères acides éthylène acrylique, les dérivés terpéniques, les ionomères et leurs mélanges.

On peut citer à titre d'exemple les substances, le Cartaseal SVU commercialisé par la société Clariant, Michem Prime 4983RE, 4990RE et 2960 E commercialisées par la société Michelman, le Tecseal E 787 commercialisé par Trub pour les acides d'éthylène acryliques, comme le Dermulsen TR602 commercialisé par la société DRT pour les dérivés terpéniques, le Surlyn D3308 commercialisé par la société Dow chemical pour les ionomères.

Les copolymères d'éthylène et d'acides acryliques ou métacryliques peuvent être choisis avec un pourcentage d'acide acrylique compris entre 0 et 40 %, plus particulièrement entre 10 et 30 %. Ils peuvent présenter également un débit de polymère fondu (Melt Flow) en g/10minutes compris entre 50 et 1000 g/10min. Elles peuvent également présenter une température de ramollissement T°Cm supérieure à 35°C, préférentiellement supérieure à 45°C et dans un mode particulier supérieure à 60°C préférentiellement.

Les dérivés terpéniques pourront être choisis parmi ceux qui présentent une température de ramollissement inférieure à 120°C, et préférentiellement inférieure à 100°C.

Selon un mode de réalisation particulier, l'agent tackifiant est choisi parmi les copolymères d'éthylène acide acrylique, communément nommés EAA.

L'agent tackifiant peut être présent dans la composition dans une teneur en matière sèche inférieure à 25 % en poids, notamment inférieure à 20 % en poids et plus préférentiellement inférieure à 15% en poids, par rapport au poids total de la composition, notamment comprise entre 0,2 et 20 % en poids, ou comprise entre 0,2 et 10 % en poids.

### Additifs fonctionnels

Selon un mode de réalisation avantageux, la composition conforme à la présente invention comprend en outre un agent additif fonctionnel, par exemple apte à améliorer l'homogénéisation de la composition, ou par exemple apte à permettre l'utilisation de la composition d'encollage au sein d'une Size Press (= Presse en colleuse), ou de réguler la pénétration de la composition d'encollage au sein du substrat fibreux au besoin.

A titre d'additif fonctionnel, on peut notamment citer les polyvinyle alcools, que l'homme de l'art pourra choisir en fonction de la masse molaire, du taux d'hydrolyse afin d'ajuster la viscosité, selon ses connaissances générales.

Les polyvinyle alcools peuvent être obtenus de l'hydrolyse de polyvinyle acétate correspondants. Ce taux d'hydrolyse (ou de saponification) est avantageusement exprimé en % de mol de motifs polyvinyl acétate saponifiés.

L'homme de l'art peut choisir le polyvinyle alcool en fonction de la viscosité d'une solution aqueuse à 4% de ce polyvinyle alcool, mesurée à 23°C selon la norme DIN 53015.

Ainsi, selon un mode de réalisation particulier, le polyvinyle alcool peut présenter une viscosité telle que décrite ci-dessous, à savoir inférieure à 10 mPa.s et un taux d'hydrolyse supérieur à 85%, et préférentiellement présenter une viscosité inférieure à 6mPa.s et un taux d'hydrolyse supérieur à 95%.

D'autres additifs fonctionnels peuvent également être cités : les agents de collage comme par exemple ceux à base d'alkyle kétène dimère, la carboxyméthyl cellulose, les antimousses, les amidons, les charges minérales, telles que le carbonate de calcium, le talc, le kaolin ou le titane, les pigments, les produits barrière aux graisses et aux liquides de faible tension de surface et les composés aptes à ajuster le pH tels que l'hydroxyde de potassium ou l'ammoniaque.

L'additif fonctionnel peut également être choisi comme présentant des caractéristiques de viscosité telle qu'en sa forme d'ajout, il induit une viscosité Brookfield à 23 °C finale de la composition d'encollage inférieure à 1000 centipoises, en particulier inférieure à 500 centipoises et préférentiellement inférieure à 250 centipoises lorsque mesurée à 100 tours minute.

Ces additifs fonctionnels peuvent notamment être présents dans une teneur en matière sèche inférieure à 10 % en poids, et dans un mode particulier inférieure à 2% par rapport au poids total de la composition, notamment compris entre 0 et 10 % en poids, en particulier entre 0 et 5 % en poids.

La composition d'encollage peut être obtenue par mélange des composés mentionnés ci-dessus selon des techniques connues de l'homme du métier.

En particulier, le mélange peut nécessiter une étape d'agitation, voire une étape de cuisson.

Selon un mode de réalisation particulier, la composition d'encollage comprend un polyuréthane, par exemple présentant une température d'activation supérieure à 60°C, un copolymère d'éthylène acide acrylique, notamment comprenant entre 10 et 30 % d'acide acrylique et présentant un température de fusion supérieure à 60°C, et un polyvinyle alcool, notamment dont une solution aqueuse à 4% en poids présente une viscosité inférieure à 6 mPa.s à 23°C, présentant un taux d'hydrolyse supérieur à 95%.

### MATÉRIAU FIBREUX D'EMBALLAGE MEDICAL THERMOSCELLABLE

Le matériau fibreux d'emballage thermoscellant peut être rendu apte à être imprimé.

### Composition du matériau fibreux d'emballage

La mesure de la teneur en matière sèche des composés issus de la composition d'encollage dans le matériau fibreux d'emballage selon la présente invention peut être réalisée à une hygrométrie comprise entre 0,5 et 6 %, et préférentiellement entre 4 et 6%.

Dans ces conditions, la teneur en matière première en polyuréthane peut varier de 1 à 25 % en poids, en particulier de 2 à 20 %, et préférentiellement de 2 à 15 % en poids, par rapport au poids total du matériau fibreux d'emballage fini.

Dans ces mêmes conditions, lorsqu'il est présent, la teneur en agent coliant ou de renfort en matière sèche peut varier de 1 à 15 % en poids, en particulier de 2 à 15 % et préférentiellement de 2 à 10 % en poids, par rapport au poids total du matériau fibreux d'emballage fini.

Toujours dans ces mêmes conditions, la teneur en matière sèche en agent tackifiant est inférieure à 15%, en particulier peut varier de 0,2 à 15 % en poids, et préférentiellement de 0,2 à 10 % en poids, par rapport au poids total du matériau fibreux d'emballage fini.

Toujours dans ces mêmes conditions, lorsqu'il est présent la teneur en additif fonctionnel est comprise entre 0,1 et 7 % en poids, plus particulièrement entre 0,1 et 5 % en poids notamment, en particulier lorsque l'additif fonctionnel consiste en le polyvinyle alcool, inférieur à 2% plus particulièrement inférieure à 1 % en poids, par rapport au poids total du matériau fibreux d'emballage fini.

Selon un mode de réalisation particulier, le matériau fibreux d'emballage thermoscellant comprend un substrat monocouche fibreux non tissé ou papier imprégné à coeur par au moins un polyuréthane par exemple, présentant une température d'activation supérieure à 60 °C, par au moins un copolymère d'éthylène acide acrylique, notamment comprenant entre 10 et 30 % d'acide acrylique et présentant une température de fusion supérieure à 60 °C, et par au moins un polyvinyle alcool, notamment dont une solution aqueuse à 4% présente une viscosité inférieure à 6mPa.s à 23°C et notamment présentant un taux d'hydrolyse supérieur à 95 %.

Les pourcentages massiques ci-dessus sont valables quel que soit le procédé mis en oeuvre avec la composition d'emballage, à savoir l'enduction et l'encollage à coeur.

Ainsi, selon un premier mode de réalisation, le brevet décrit un matériau fibreux d'emballage médical thermoscellable comportant un substrat monocouche fibreux non tissé encollé à coeur par au moins un polyuréthane et au moins un agent coliant ou de renfort, en particulier tel que défini précédemment.

Selon ce mode de réalisation, la teneur en matière sèche en polyuréthane peut être comprise entre 1 et 25 % en poids, en particulier entre 2 et 20 % en poids, et la teneur en matière sèche en agent coliant ou de renfort peut être comprise entre 1 et 15 % en poids, en particulier entre 2 et 10 % en poids, par rapport au poids total du matériau fibreux d'emballage fini.

Selon un deuxième mode de réalisation, la présente invention vise un matériaux fibreux d'emballage médical thermoscellant comportant un substrat monocouche fibreux non tissé encollé à coeur par au moins un polyuréthane et au moins un agent tackifiant, en particulier tel que défini précédemment.

Selon ce mode de réalisation, la teneur en matière sèche en polyuréthane peut être comprise entre 1 et 20 % en poids, en particulier entre 2 et 15 % en poids, et la teneur en matière sèche en agent tackifiant peut être inférieure à 15 % comprise entre 0,2 et 10 % en poids, en particulier entre 0,5 et 7 % en poids, par rapport au poids total du matériau fibreux d'emballage fini.

Selon un troisième mode de réalisation, la présente invention vise un matériaux fibreux d'emballage médical thermoscellant comportant un substrat monocouche fibreux non tissé encollé à coeur par au moins un polyuréthane, au moins un agent coliant ou de renfort, en particulier tel que défini précédemment et au moins un agent tackifiant, en particulier tel que défini précédemment.

Selon ce mode de réalisation, la teneur en matière sèche en polyuréthane peut être comprise entre 1 et 20 % en poids, en particulier entre 2 et 15 % en poids, la teneur en matière sèche agent coliant ou de renfort peut être comprise entre 1 et 15 % en poids, en particulier entre 2 et 10 % en poids, et la teneur en matière sèche en agent tackifiant peut être comprise entre 0,2 et 10 % en poids, en particulier entre 1 et 7 % en poids, par rapport au poids total du matériau fibreux d'emballage fini.

Selon un quatrième mode de réalisation, le matériau fibreux d'emballage médical thermoscellable ne comprend pas de polyoléfine, notamment de polyéthylène et de polypropylène.

### Caractérisation du matériau fibreux d'emballage médical thermoscellable

Selon le mode de réalisation privilégié d'encollage à coeur, le matériau fibreux d'emballage médical thermoscellable est facilement différentiable des papiers médicaux couramment employés dans la mesure où les deux faces du matériau monocouche obtenu présentent une propriété thermoscellante en raison de la présence de la composition d'encollage sur ses deux faces. Cela n'est pas le cas des papiers couchés ou laminés de l'art antérieur.

### Barrière microbiologique

Le matériau fibreux d'emballage thermoscellant selon la présente invention satisfait aux exigences du test de barrière microbiologique conforme à la norme intitulée « BARRIERE DIN TEST » DIN ISO 58953-6 (subclause) section 3 (under humidity = à l'état humide) & section 4 (with air permeance = à l'état sec). En particulier, et en ce qui concerne la section 3 à l'état humide, le nombre total de colonies de germes ayant traversé 20 échantillons du matériau selon la présente invention peut être compris entre 0 et 4 (Pass/Fail), et en particulier égal à 0. En particulier, dans les conditions du test barrière décrites dans la section 4 de la norme DIN-ISO 58953/6 le nombre total de colonies de germes ayant traversé 10 échantillons du matériau selon la présente invention peut être compris entre 0 et 15, et en particulier égal à 0, sans toutefois dépasser 5 sur chaque échantillon pris individuellement et préférentiellement égal à 0.

Le matériau fibreux d'emballage selon l'invention est avantageusement également caractérisé par sa propriété barrière évaluée selon le test d'efficacité de filtration bactérienne décrit selon le standard ASTM F2101-01. Ce test exprime le ratio du nombre de microorganismes stoppés par le matériau testé, divisé par le nombre de microorganismes pulvérisés sur le matériau testé. En particulier, le ratio de germes stoppés par le matériau selon la présente invention peut être compris entre 80 et 100 %, en particulier supérieur à 95 %.

Le matériau fibreux d'emballage thermoscellant selon la présente invention satisfait de préférence à ces mêmes exigences, y compris après stérilisation.

### Barrière aux liquides

Le matériau fibreux d'emballage thermoscellant selon l'invention présente avantageusement des propriétés de barrière aux liquides, que l'on peut quantifier selon la méthode dite Cobb décrite dans l'ISO535, où on mesure la quantité d'eau absorbée par le matériau fibreux d'emballage après une minute.

Selon cette méthode, le matériau fibreux d'emballage présente avantageusement une valeur de Cobb inférieure à 30 g/m², en particulier inférieure à 20 g/m² et plus particulièrement à 15 g/m².

### Force de scellage

Le matériau fibreux d'emballage selon la présente invention présente avantageusement une force de scellage compatible avec son usage.

La mesure de la force de scellage peut être effectuée selon la méthode B (extrémités maintenues) décrite par l'ASTM F88. La force de scellage est mesurée à une vitesse constante de séparation des extrémités de 200 mm/min.

En particulier, le matériau fibreux d'emballage médical thermoscellant selon la présente invention peut présenter une force de scellage supérieure à 100cN/15mm, en particulier supérieure 120cN/15mm, et préférentiellement supérieure à 150cN/15mm, voire à 175cN/15 mm lorsque mesurée en T peel selon la norme ASTM F88.

### Diamètre de pores maximum

Les propriétés de barrière microbienne du matériau fibreux d'emballage de la présente invention, sont également dépendantes du diamètre du pore maximum lorsque mesuré selon la méthode décrite dans l'annexe D normative de l'EN 868-3: 2009.

En particulier, le diamètre du pore maximum du matériau fibreux d'emballage de la présente invention peut être avantageusement inférieur à 50 µm, en particulier inférieur à 35 µm et de préférence inférieur à 20 µm.

### Porosité Bendtsen

La porosité du matériau fibreux d'emballage thermoscellant peut notamment varier de 20 à 2500 ml/min, en particulier de 100 à 1500 ml/min , selon la méthode de mesure de porosité Bendtsen, conforme à la norme ISO 5636-3.

### PROCEDE DE PREPARATION DU MATÉRIAU FIBREUX D'EMBALLAGE MEDICAL THERMOSCELLANT

La présente invention vise un procédé de fabrication selon la revendication 15.

Différentes méthodes d'encollage peuvent être utilisées.

Parmi les méthodes d'encollage, on peut citer l'imprégnation, la saturation, la précipitation à coeur ou la pulvérisation. Toutes ces méthodes sont bien connues de l'homme du métier.

Typiquement, selon un premier mode de réalisation, le substrat monocouche fibreux est exposé à un excès de solution d'encollage par application par pression de préférence de part et d'autre du substrat. Le substrat monocouche fibreux est par exemple entraîné dans une presse, par exemple une size press (presse encolleuse), puis séché.

Tout autre appareillage équivalent à une size press peut bien entendu être employé dans le cadre de la présente invention, pour autant qu'une saturation à coeur et en surface soit obtenue, par exemple imprégnatrice, film press, couchage kiss-roll, rouleau gravé.

Typiquement selon un second mode de réalisation, le substrat fibreux est pulvérisé à l'aide de la solution d'encollage conforme à la présente invention, puis séché.

Selon un troisième mode de réalisation, la solution est précipitée à coeur du substrat en phase aqueuse avant la formation de la feuille, puis l'ensemble est séché.

Selon un mode de réalisation, cette étape d'encollage est réalisée en ligne, c'est-à-dire que l'encollage se fait sur la laize (la largeur) qui sort de la toile de formation, la progression de l'encollage s'effectuant à la même vitesse que la formation du substrat fibreux. La machine utilisée est par exemple une machine à papier à table plate, ou encore une machine de formation de voile non tissé par voie sèche, de type Airlaid.

L'application de la composition d'encollage, de préférence en excès de part et d'autre du substrat, permet d'obtenir une imprégnation en profondeur dans le substrat. La pression exercée permet de faire pénétrer la composition dans les pores du substrat et d'obtenir un substrat imprégné de façon homogène dans les trois dimensions.

L'excès de composition peut être retiré par raclage.

L'étape d'encollage est suivie par une étape de séchage. Le substrat fibreux est par exemple passé au travers d'une section de séchage formée de cylindres chauffés à la vapeur d'eau mis en contact avec les deux côtés du substrat fibreux, ou soumis aux rayonnement infrarouge, ou passé dans un tunnel soufflant de l'air chaud au travers du substrat fibreux.

Le séchage peut être effectué à une température comprise entre 50 et 250 °C, notamment entre 60 et 150 °C, et préférentiellement inférieure à 110 °C.

L'eau est par exemple évaporée pour atteindre une teneur comprise entre 0,5% et 6 %, par exemple entre 4 et 6 %, et préférentiellement entre 3% et 6% en poids dans le substrat fibreux fini.

Selon un mode de réalisation de la présente invention, le procédé ne comporte aucune étape de couchage d'une composition thermo-adhésive.

### EMBALLAGE

L'invention s'intéresse encore à un emballage selon la revendication 17.

La partie rigide ou pseudo rigide ou flexible de l'emballage, généralement thermoformée, est également adaptée à former une barrière anti-bactérienne. Elle peut notamment être formée de polymères classiques composés d'au moins un des polymères choisis parmi le groupe comprenant le polyester (PES), le polyéthylène (PE), le poplypropylène (PP), le polystyrène (PS), le polyéthylène téréphtalate (PET), le polyéthylène téréphtalate amorphe (APET) et le polychlorure de vinyl (PVC).

L'invention pourra être mieux comprise à l'examen du dessin annexé, sur lequel :
- la figure 1 illustre, schématiquement, la fabrication d'un substrat fibreux médical thermoscellable selon l'invention,
- les figures 2A à 2D sont des photographies en coupe ou en vue de dessus de trois types de substrat fibreux.

On a représenté partiellement sur la figure 1 une ligne de fabrication de substrat fibreux où le substrat monocouche fibreux 5 sort, par exemple, d'une cuve de formation de substrat fibreux et est imprégné à coeur par un passage dans une size press 2 par une composition d'encollage 1 comprenant au moins un polyuréthane dispersé en phase aqueuse 5, la matière sèche étant représentée en 6. Le substrat fibreux ainsi imprégné traverse ensuite une section de séchage 3.

On a représenté en figures 2A et 2B des photographies d'un substrat monocouche fibreux 10 respectivement en vue de coupe et en vue de dessus.

On distingue les fibres entrecroisées 11.

A titre d'illustration d'un papier thermoscellable pour usage médical réalisé par enduction hors ligne selon l'art antérieur, on a représenté en figure 2C une photographie d'un matériau fibreux et enduit. La couche d'enduit 12 se distingue nettement du matériau fibreux 13.

On a représenté en figure 2D une photographie d'un matériau fibreux médical thermoscellable conforme à l'invention comprenant un mélange de polyuréthane et d'acide éthylène acrylique. On constate que la composition est répartie au sein du réseau fibreux.

On constate également l'homogénéité dudit matériau fibreux.

Le grammage de ce papier est de 80 g/m.

Les exemples 1, 2, 5 et 6 ci-après illustrent l'invention sans en limiter la portée. Les exemples 3 et 4 sont décrits pour faciliter la compréhension de l'invention mais n'en font pas partie.

### Exemple 1 : Composition d'encollage

Selon le premier mode réalisation décrit dans la présente invention, on peut citer par exemple la composition d'encollage suivante comprenant un polyuréthane ainsi qu'un tackifiant.

Selon un mode de préparation préférentiel l'introduction de l'émulsion de polyuréthane précède celle de l'agent tackifiant.

| | Pourcentage en poids de matière sèche par rapport au poids total de la composition |
|---|---|
| Polyuréthane ⁽¹⁾ | 13,6 % |
| Agent tackifiant ⁽²⁾ | 8,5 % |
| **Total matière sèche** | **22,1 %** |

| | |
|---|---|
| ⁽¹⁾ commercialisé sous le nom Dispercoll U42 par la société Bayer Material Science. ⁽²⁾ commercialisé sous le nom Michem Prime 2960E par la société Michelman. | |

### Exemple 2 : Matériau fibreux d'emballage médical thermoscellable

On part d'un substrat fibreux composé d'un mélange de fibres courtes d'eucalyptus blanchies et de fibres longues blanchies de résineux. La teneur en poids sec des fibres par rapport au poids total du papier final conditionné à une hygrométrie de 5 % est respectivement de 42 % pour les fibres courtes et de 42 % pour les fibres longues blanchies.

Avant imprégnation, ce substrat fibreux présente une porosité Bendtsen de 1400 ml/min. Ce substrat fibreux, une fois formé et séché par passage sur des rouleaux chauffés à la vapeur d'eau, est imprégné en ligne avec la composition d'encollage selon l'exemple 1 au moyen d'une presse encolleuse (size press), puis est séché. L'hygrométrie finale est de 5 % et le grammage final de 82 g/m².

Le papier ainsi obtenu est caractérisé par son pourcentage en poids en matière sèche présente dans le papier médical thermoscellant, comme suit :

| | |
|---|---|
| Polyuréthane | 6,2 % |
| Agent tackifiant | 3,9 % |
| Agent coliant ou de renfort | 0 % |
| eau | 5 % |
| **Total matière sèche** | **10,1 %** |

### Diamètre de pores maximum

La moyenne des diamètres de pores maximum est de 17,5 µm sans pour autant excéder 20 µm, lorsque mesuré selon la méthode décrite par l'annexe D normative de la norme En 868-3 : 2009.

### Force de scellage ASTM F88 de l'exemple 2

La scellabilité est évaluée sur deux types de films :
1- un film constitué de polyamide et polyéthylène de 85 µm d'épaisseur
2- un film constitué de PET / PEde 52 µm d'épaisseur.

Les conditions de scellages sont respectivement :
1- Application d'une pression de 450 kPa pendant 1,2 secondes à 160 °C
2- Application d'une pression de 600 kPa pendant 2 secondes à 160 °C

Dans ces conditions, un scellage « pelable » est obtenu n'occasionnant pas de délaminage du matériaux fibreux thermoscellabe lors de son ouverture.

Selon la méthode de descellage en « T peel » décrite par la norme ASTM F88 et à une vitesse d'ouverture du scellage de 200 mm/min, les forces de descellage ont été évaluées à 250 cN/15mm lorsque le papier est scellé contre le premier film de 85 µm en polyamide/polyéthylène, et à 350 cN/15mm lorsque scellé contre le film de 52 µm polyéthylènetéréphtlate/polyéthylène.

### Exemple 3 : Composition d'encollage

Selon le second mode réalisation décrit dans la présente invention, on peut citer par exemple la sauce d'encollage suivante comprenant une émulsion de polyuréthane ainsi qu'un agent coliant ou de renfort, que l'on introduit en dernier lors de la préparation.

| | Pourcentage en poids de matière sèche par rapport au poids total de la composition |
|---|---|
| Polyuréthane ⁽¹⁾ | 12,5 % |
| Agent coliant ⁽³⁾ | 12,5 % |
| **Total matière sèche** | **25 %** |

| | |
|---|---|
| ⁽¹⁾ commercialisé sous le nom Dispercoll U56 par la société Bayer Material Science. ⁽³⁾ commercialisé sous le nom XZ 94755 par la société Dow. | |

### Exemple 4 : Matériau fibreux d'emballage médical thermoscellable

Selon le même procédé de fabrication décrit dans l'exemple 2 de la présente invention, on part d'un substrat fibreux composé d'un mélange de fibres courtes d'eucalyptus blanchies et de fibres longues blanchies de résineux. La teneur en poids sec des fibres cellulosiques par rapport au poids total du papier final conditionné à une hygrométrie de 5 % est respectivement de 47 % pour les fibres courtes et de 32 % pour les fibres longues blanchies.

Avant imprégnation, ce substrat fibreux présente une porosité Bendtsen de 2000 ml/min. Ce substrat fibreux, une fois formé et séché, est imprégné en ligne avec la composition d'encollage selon l'exemple 3 au moyen d'une presse encolleuse (size press), puis est séché. L'hygrométrie finale est de 5 % et le grammage final de 89 g/m².

Le papier ainsi obtenu est caractérisé par son pourcentage en poids en matière sèche présente dans le papier médical thermoscellant, comme suit :

| | |
|---|---|
| Polyuréthane | 7,5 % |
| Agent coliant ou de renfort | 7,2 % |
| Eau | 5 % |
| **Total matière sèche** | **14,7 %** |

### La perméabilité à l'air :

Le papier ainsi obtenu présente une porosité bendtsen de 756 ml/min selon le test décrit par la norme ISO 5636.

Le diamètre de pore maximum est de 17,8 µm lorsque que mesuré conformément a la norme

### Force de scellage

Un scellage pelable a pu être obtenu entre le papier final et un film polyamide / polyéthylène de 170 µm d'épaisseur en appliquant une pression de 600kPa pendant 1,2 secondes à 160 °C. L'ouverture du scellage n'a pas occasionné le délaminage du papier médical thermoscellable obtenu dans cet exemple 4.

La force de descellage a été mesurée selon la norme ASTM F88 en « T peel », selon une vitesse d'ouverture de 200 mm/min.

La force de descellage a ensuite été évaluée avant et après une stérilisation au gaz oxyde d'éthylène. Dans les deux cas les forces restent supérieures à 175 cN/15mm.

| | | |
|---|---|---|
| Force de descellage | Avant stérilisation | 198 cN/ 15mm |
| Force de descellage | Après stérilisation | 188 cN/15 mm |

### Exemple 5 : Composition d'encollage

Selon le troisième mode évoqué de réalisation cet exemple illustre l'utilisation d'une composition d'encollage comprenant un polyuréthane, un agent coliant ou de renfort, un agent tackifiant ainsi qu'un additif fonctionnel permettant de réguler la viscosité du bain ainsi que l'uniformité de l'imprégnation dans le substrat fibreux.

Lors de la préparation, après une première portion d'eau, l'agent coliant ou de renfort est introduit, suivi dans l'ordre, par l'additif fonctionnel, l'émulsion de polyuréthane et par le tackifiant. Enfin une ultime portion d'eau est ajoutée.

| **Exemple 5** | Pourcentage en poids de matière sèche par rapport au poids total de la composition |
|---|---|
| Polyuréthane ⁽¹⁾ | 5,6 % |
| Agent tackifiant ⁽²⁾ | 2,8 % |
| Agent coliant ou de renfort ⁽³⁾ | 6,3 % |
| Alcool polyvinylique ⁽⁴⁾ | 0,3 % |
| **Total matière sèche** | **15 %** |

| | |
|---|---|
| ⁽¹⁾ commercialisé sous le nom Dispercoll U56 par la société Bayer Material Science. ⁽²⁾ commercialisé sous le nom Michem Prime 4983 RE par la société Michelman. ⁽³⁾ commercialisé sous le nom Texicote^{®} 03-29 par la société Scott Bader. ⁽⁴⁾ commercialisé sous le nom Celvol 4-98 par la société Celanese. | |

### Exemple 6 : Matériau fibreux d'emballage médical thermoscellable

On part d'un substrat fibreux composé d'un mélange de fibres courtes d'eucalyptus et de fibres semi blanchies de résineux. La teneur en poids par rapport au poids total du papier final conditionné à une hygrométrie de 4 % est respectivement de 33,5 % pour les fibres courtes et de 50 % pour les fibres longues semi blanchies.

Avant imprégnation, ce support fibreux présente une porosité bendtsen de 1550 ml/min. Ce support fibreux une fois formé et séché est imprégné en ligne avec la composition d'encollage selon l'exemple 5 au moyen d'une presse encolleuse (size press), puis est séché. L'hygrométrie finale est de 4 %. Le grammage final est de 75 g/m².

Le papier ainsi obtenu est caractérisé par son pourcentage en poids en matière sèche présente dans le papier médical thermoscellant,-comme suit :

| | |
|---|---|
| Polyuréthane | 4 % |
| Agent tackifiant | 2 % |
| Agent coliant ou de renfort | 4,5 % |
| Additif fonctionnel | 0,2 % |
| Eau | 4 % |
| **Total matière sèche** | **10,7 %** |

Le papier obtenu est ensuite testé en vue de déterminer ses différentes caractéristiques.

### Test barrière microbiologique

Selon la norme intitulée « Bacterial Filtration Efficiency » ASTM F2101-01, la proportion de germes stoppés par le papier obtenu est de 99,6 %.

Ce papier est également qualifié comme suffisamment barrière aux microbes à l'état humide et sec lorsque testé selon les méthodes décrites dans les sections 3 et 4 de la norme DIN ISO 58953-6.

### Test barrière aux liquides

L'hydrophobie du papier final lorsque mesurée selon la méthode du cobb test décrite par la norme ISO 535 est de 16 g/m².

### Force de scellage ASTM F88

La scellabilité est mesurée en scellant le papier final sur un film d'épaisseur 85 µm et comprenant du polyamide et une couche de polyéthylène.

Le scellage est réalisé sous une pression de 600 kPa, pendant 1,2 secondes et à une température de 160 °C.

La force de scellage est alors mesurée en « T-peel » sous une vitesse d'élongation de 200 mm/min, et évaluée à 250 cN/15mm. Aucun délaminage n'est observé.

L'expression « comportant un » doit être comprise comme étant synonyme de « comportant au moins un », sauf si le contraire est spécifié.

## Revendications

1. Matériau fibreux d'emballage médical thermoscellable comportant un substrat monocouche fibreux non tissé ou papier imprégné à coeur par au moins un polyuréthane et au moins un agent tackifiant.

2. Matériau fibreux d'emballage médical thermoscellable selon la revendication 1, le polyuréthane ayant une température de transition vitreuse comprise entre -85 °C et 25 °C, plus particulièrement inférieure à 10 °C, voire préférentiellement inférieure à 5 °C.

3. Matériau fibreux d'emballage médical thermoscellable selon la revendication 1 ou 2, le polyuréthane présentant une température d'activation supérieure à 25°C, en particulier supérieure à 40 °C, et préférentiellement supérieure à 60 °C.

4. Matériau fibreux d'emballage médical thermoscellable selon l'une quelconque des revendications 1 à 3, la teneur en matière sèche en polyuréthane étant comprise entre 1 et 25 %, notamment entre 2 et 20 %, et plus particulièrement entre 2 et 15 % en poids par rapport au poids total du matériau fibreux d'emballage, mesuré à une hygrométrie comprise entre 0,5 et 6 %, et préférentiellement entre 4 et 6 %.

5. Matériau fibreux d'emballage médical thermoscellable selon l'une quelconque des revendications précédentes, comprenant en outre au moins un agent coliant ou agent de renfort.

6. Matériau fibreux d'emballage médical thermoscellable selon la revendication précédente, l'agent coliant ou de renfort étant choisi parmi les copolymères acryliques d'acétate de vinyle et leurs mélanges, et préférentiellement choisi parmi les émulsions de styrène acrylique et de styrène butadiène.

7. Matériau fibreux d'emballage médical thermoscellable selon l'une des revendications 5 et 6, la teneur en matière sèche en agent coliant ou de renfort étant comprise entre 1 et 15 % en poids, notamment entre 2 et 15 %, et plus particulièrement entre 2 et 10 % en poids, par rapport au poids total du matériau fibreux d'emballage, mesuré à une hygrométrie entre 0,5 et 6 %, et préférentiellement entre 4 et 6 %.

8. Matériau fibreux d'emballage médical thermoscellable selon l'une quelconque des revendications précédentes, l'agent tackifiant étant choisi parmi les copolymères éthylène acide acrylique, les dérivés terpéniques et leurs mélanges.

9. Matériau fibreux d'emballage médical thermoscellable selon l'une quelconque des revendications précédentes, la teneur en matière sèche en agent tackifiant étant inférieure à 15 % en poids, notamment comprise entre 0,2 et 15 %, et plus particulièrement entre 0,2 et 10 % en poids, par rapport au poids total du matériau fibreux d'emballage, mesuré à une hygrométrie entre 0,5 et 6 %, et préférentiellement entre 4 et 6 %.

10. Matériau fibreux d'emballage médical thermoscellable selon l'une quelconque des revendications précédentes, comprenant en outre un additif fonctionnel, ledit additif fonctionnel pouvant être présent en une teneur comprise entre 0,1 et 7 %, plus particulièrement entre 0,1 et 5 % en poids, par rapport au poids total du matériau fibreux d'emballage notamment dans une teneur inférieure à 2 %, plus particulièrement inférieure à 1 % en poids, mesuré à une hygrométrie entre 0,5 et 6 %, et préférentiellement entre 4 et 6%.

11. Matériau fibreux d'emballage médical thermoscellable selon la revendication précédente, l'additif fonctionnel étant choisi parmi les polyvinyle alcools modifiés ou non, les agents de collage, les carboxy méthyl celluloses, les antimousses, les amidons, les charges minérales, les pigments, les produits barrière aux graisses et aux liquides de faible tension de surface et les composés aptes à ajuster le pH, et plus particulièrement l'additif fonctionnel étant un polyvinyle alcool.

12. Matériau fibreux d'emballage médical thermoscellable selon l'une quelconque des revendications précédentes, **caractérisée en ce qu'**il comprend un substrat monocouche fibreux non tissé ou papier imprégné à coeur par au moins un polyuréthane, par exemple présentant une température d'activation supérieure à 60 °C, par au moins un copolymère d'éthylène acide acrylique, notamment comprenant entre 10 et 30 % d'acide acrylique et présentant une température de fusion supérieure à 60°C, et par au moins un polyvinyle alcool, notamment dont une solution aqueuse à 4% en poids présente un viscosité inférieure à 6mPa.s à 23°C, et notamment présentant un taux d'hydrolyse supérieur à 95 %.

13. Matériau fibreux d'emballage médical thermoscellable selon l'une quelconque des revendications précédentes, le substrat étant un substrat fibreux non tissé comprenant des fibres naturelles, en particulier cellulosiques, ou des fibres synthétiques, ou encore un mélange de fibres naturelles et synthétiques.

14. Matériau fibreux d'emballage médical thermoscellable selon l'une quelconque des revendications précédentes, présentant une force de scellage supérieure à 100 cN/15mm, en particulier supérieure à 150 cN/15 mm et préférentiellement supérieure à 175 cN/15mm par exemple à 175cN/15 mm lorsque mesurée en T peel selon la norme ASTM F88.

15. Procédé de fabrication d'un matériau fibreux d'emballage médical thermoscellable, notamment un matériau fibreux d'emballage tel que défini dans l'une quelconque des revendications 2 à 14, comprenant au moins :
i. une étape d'encollage à coeur d'un substrat monocouche fibreux non tissé avec une composition d'encollage comprenant une dispersion aqueuse d'au moins un polyuréthane et au moins un agent tackifiant, et
ii. une étape de séchage.

16. Procédé de fabrication d'un matériau fibreux d'emballage médical thermoscellable selon la revendication précédente, l'étape d'encollage étant réalisée en ligne, notamment à l'aide d'une size press, d'une ligne de pulvérisation ou encore à l'aide d'une précipitation à coeur.

17. Emballage à usage médical comprenant un matériau fibreux d'emballage médical thermoscellable selon l'une quelconque des revendications 1 à 14.

18. Composition d'encollage d'un substrat monocouche fibreux non tissé, notamment pour la mise en oeuvre du procédé selon la revendication 15 ou 16, comprenant :
i. au moins un polyuréthane,
ii. au moins un agent tackifiant, notamment tel que défini à la revendication 8,
iii. au moins un agent coliant ou de renfort, notamment tel que défini à la revendication 6,
iv. et éventuellement au moins un additif fonctionnel, notamment tel que défini à la revendication 11 en particulier un polyvinyle alcool.

## Patentansprüche

1. Fasermaterial zur medizinischen Verpackung mit Heißsiegelbarkeit, das ein ungewebtes fasriges einlagiges Substrat oder Papier aufweist, das innerlich mindestens mit einem Polyurethan und mindestens einem Klebrigmacher imprägniert ist.

2. Fasermaterial zur medizinischen Verpackung mit Heißsiegelbarkeit nach Anspruch 1, wobei das Polyurethan eine Glasübergangstemperatur zwischen -85°C und 25°C, insbesondere unterhalb von 10°C, weiter vorzugsweise unterhalb von 5°C aufweist.

3. Fasermaterial zur medizinischen Verpackung mit Heißsiegelbarkeit nach Anspruch 1 oder 2, wobei das Polyurethan eine Aktivierungstemperatur oberhalb von 25°C, insbesondere oberhalb von 40°C und vorzugsweise oberhalb von 60°C aufweist.

4. Fasermaterial zur medizinischen Verpackung mit Heißsiegelbarkeit nach einem der Ansprüche 1 bis 3, wobei der Polyurethan-Trockenmaterialgehalt zwischen 1 und 25 %, insbesondere zwischen 2 und 20 % und weiter insbesondere zwischen 2 und 15 % im Gewicht bezogen auf das Gesamtgewicht des Fasermaterials zur Verpackung gemessen bei einer Luftfeuchtigkeit zwischen 0,5 und 6 % und vorzugsweise zwischen 4 und 6 % beträgt.

5. Fasermaterial zur medizinischen Verpackung mit Heißsiegelbarkeit nach einem der vorhergehenden Ansprüche mit außerdem mindestens einem Bindemittel oder Verstärkungsmittel.

6. Fasermaterial zur medizinischen Verpackung mit Heißsiegelbarkeit nach dem vorhergehenden Anspruch, wobei das Bindemittel oder Verstärkungsmittel aus Acryl-Vinylacetat-Copolymeren oder ihren Mischungen und vorzugsweise aus Emulsionen von Styrol-Acryl und Styrol-Butadien ausgewählt ist.

7. Fasermaterial zur medizinischen Verpackung mit Heißsiegelbarkeit nach einem der Ansprüche 5 und 6, wobei der Trockenmaterialgehalt an Bindemittel oder Verstärkungsmittel zwischen 1 und 15 Gew.-%, insbesondere zwischen 2 und 15 und weiter insbesondere zwischen 2 und 10 Gew.-% bezogen auf das Gesamtgewicht des Fasermaterials zur Verpackung gemessen bei einer Luftfeuchtigkeit zwischen 0,5 und 6 % und vorzugsweise zwischen 4 und 6 % beträgt.

8. Fasermaterial zur medizinischen Verpackung mit Heißsiegelbarkeit nach einem der vorhergehenden Ansprüche, wobei der Klebrigmacher aus Ethylen-Acrylsäure-Copolymeren, Terpenderivaten und ihren Mischungen ausgewählt ist.

9. Fasermaterial zur medizinischen Verpackung mit Heißsiegelbarkeit nach einem der vorhergehenden Ansprüche, wobei der Trockenmaterialgehalt des Klebrigmachers weniger als 15 Gew.-%, insbesondere zwischen 0,2 und 15 Gew.-%, weiter insbesondere zwischen 0,2 und 10 Gew.-% bezogen auf das Gesamtgewicht des Fasermaterials zur Verpackung gemessen bei einer Luftfeuchtigkeit zwischen 0,5 und 6 %, vorzugsweise zwischen 4 und 6 % beträgt.

10. Fasermaterial zur medizinischen Verpackung mit Heißsiegelbarkeit nach einem der vorhergehenden Ansprüche mit außerdem einem funktionellen Additiv, das in einem Gehalt zwischen 0,1 und 7 %, insbesondere zwischen 0,1 und 5 % im Gewicht bezogen auf das Gesamtgewicht des Fasermaterials zur Verpackung, insbesondere in einem Gehalt unterhalb von 2 % weiter insbesondere unterhalb von 1 % im Gewicht gemessen bei einer Luftfeuchtigkeit zwischen 0,5 und 6 %, vorzugsweise zwischen 4 und 6 % beträgt.

11. Fasermaterial zur medizinischen Verpackung mit Heißsiegelbarkeit nach dem vorhergehenden Anspruch, wobei das funktionale Additiv aus modifizierten oder unmodifizierten Polyvinylalkoholen, Haftmitteln, Carboxymethylcellulosen, Schaumgegenmitteln, Stärken, Mineralzugaben, Pigmenten, Barriereprodukten für Fette und Flüssigkeiten niedriger Oberflächenspannung und Zusammensetzungen zur pH-Regulierung ausgewählt ist und wobei das funktionale Additiv insbesondere ein Polyvinylalkohol ist.

12. Fasermaterial zur medizinischen Verpackung mit Heißsiegelbarkeit nach einem der vorhergehenden Ansprüche, **dadurch gekennzeichnet, dass** es ein ungewebtes einlagiges Fasersubstrat oder Papier enthält, das innerlich mit mindestens einem Polyurethan, beispielsweise mit einer Aktivierungstemperatur oberhalb von 60°C, mit mindestens einem Acrylsäure-Ethylen-Copolymer, insbesondere mit zwischen 10 und 30 % Acrylsäure und einer Schmelztemperatur oberhalb von 60°C, und mit mindestens einem Polyvinylalkohol, insbesondere in einer wässrigen Lösung von 4 Gew.-% mit einer Viskosität unterhalb von 6mPa·s bei 23°C, und insbesondere mit einer Hydrolyserate oberhalb von 95% imprägniert ist.

13. Fasermaterial zur medizinischen Verpackung mit Heißsiegelbarkeit nach einem der vorhergehenden Ansprüche, wobei das Substrat ein ungewebtes Fasersubstrat mit Naturfasern, insbesondere Cellulosefasern, oder mit Synthetikfasern oder einer Mischung aus Naturfasern und Synthetikfasern ist.

14. Fasermaterial zur medizinischen Verpackung mit Heißsiegelbarkeit nach einem der vorhergehenden Ansprüche, das eine Siegelkraft von mehr als 100 cN/15 mm, insbesondere oberhalb von 150 cN/15 mm und vorzugsweise oberhalb von 175 cN/15 mm, beispielsweise bei 175 cN/15 mm im T-peel-Test nach Norm ASTM F88 aufweist.

15. Verfahren zum Herstellen eines Fasermaterials zur medizinischen Verpackung mit Heißsiegelbarkeit, insbesondere eines Fasermaterials zur Verpackung nach einem der Ansprüche 2 bis 14, mindestens aufweisend:
i. einen Schritt zum innerlichen Imprägnieren eines ungewebten einlagigen Fasersubstrats mit einer Imprägnierungszusammensetzung, die eine wässrige Dispersion aus mindestens einem Polyurethan und mindestens einem Klebrigmacher umfasst, und
ii. einen Schritt zum Trocknen.

16. Verfahren zum Herstellen eines Fasermaterials zur medizinischen Verpackung mit Heißsiegelbarkeit nach dem vorhergehenden Anspruch, wobei der Imprägnierungsschritt in der Linie, insbesondere mit Hilfe einer Auftragspresse, einer Sprühlinie oder mit Hilfe eines ins Innere gehenden Niederschlags ausgeführt wird.

17. Verpackung zur medizinischen Verwendung, die ein Fasermaterial zur medizinischen Verpackung mit Heißsiegelbarkeit nach einem der Ansprüche 1 bis 14 umfasst.

18. Imprägnierungszusammensetzung für ein ungewebtes einlagiges Fasersubstrat insbesondere zur Ausführung eines Verfahrens nach Anspruch 15 oder 16, umfassend:
i. mindestens ein Polyurethan,
ii. mindestens einen Klebrigmacher, insbesondere wie in Anspruch 8 angegeben,
iii. mindestens ein Haftmittel oder Verstärkungsmittel, insbesondere wie in Anspruch 6 angegeben,
iv. und gegebenenfalls mindestens ein funktionales Additiv, insbesondere wie in Anspruch 11 angegeben und insbesondere ein Polyvinylalkohol.

## Claims

1. A fibrous material for medical packaging which is heat-sealable, comprising a nonwoven fibrous single-layer substrate or paper impregnated to the core with at least one polyurethane and at least one tackifier.

2. The fibrous material for medical packaging which is heat-sealable as claimed in claim 1, the polyurethane having a glass transition temperature of between -85°C and 25°C, more particularly below 10°C, or even preferentially below 5°C.

3. The fibrous material for medical packaging which is heat-sealable as claimed in claim 1 or 2, the polyurethane having an activation temperature above 25°C, in particular above 40°C and preferentially above 60°C.

4. The fibrous material for medical packaging which is heat-sealable as claimed in any one of claims 1 to 3, the polyurethane dry matter content being between 1% and 25%, in particular between 2% and 20% and more particularly between 2% and 15% by weight relative to the total weight of the fibrous packaging material, measured at a hygrometry of between 0.5% and 6% and preferentially between 4% and 6%.

5. The fibrous material for medical packaging which is heat-sealable as claimed in any one of the preceding claims, also comprising at least one cobinding agent or reinforcing agent.

6. The fibrous material for medical packaging which is heat-sealable as claimed in the preceding claim, the cobinding or reinforcing agent being chosen from acrylic copolymers of vinyl acetate and mixtures thereof, and preferentially from styrene acrylic emulsions and styrene butadiene emulsions.

7. The fibrous material for medical packaging which is heat-sealable as claimed in either of claims 5 and 6, the cobinding or reinforcing agent dry matter content being between 1% and 15% by weight, in particular between 2% and 15% and more particularly between 2% and 10% by weight, relative to the total weight of the fibrous packaging material, measured at a hygrometry of between 0.5% and 6% and preferentially between 4% and 6%.

8. The fibrous material for medical packaging which is heat-sealable as claimed in any one of the preceding claims, the tackifier being chosen from ethylene acrylic acid copolymers, terpene derivatives and mixtures thereof.

9. The fibrous material for medical packaging which is heat-sealable as claimed in any one of the preceding claims, the tackifier dry matter content being less than 15% by weight, in particular between 0.2% and 15% and more particularly between 0.2% and 10% by weight, relative to the total weight of the fibrous packaging material, measured at a hygrometry of between 0.5% and 6% and preferentially between 4% and 6%.

10. The fibrous material for medical packaging which is heat-sealable as claimed in any one of the preceding claims, also comprising a functional additive, it being possible for said functional additive to be present in a content of between 0.1% and 7%, more particularly between 0.1% and 5% by weight, relative to the total weight of the fibrous packaging material, especially in a content of less than 2% and more particularly less than 1% by weight, measured at a hygrometry of between 0.5% and 6% and preferentially between 4% and 6%.

11. The fibrous material for medical packaging which is heat-sealable as claimed in the preceding claim, the functional additive being chosen from modified or unmodified polyvinyl alcohols, sizing agents, carboxymethylcelluloses, antifoams, starches, inorganic fillers, pigments, products which are barriers to fats and lipids with a low surface tension, and compounds capable of adjusting the pH, with the functional additive being more particularly a polyvinyl alcohol.

12. The fibrous material for medical packaging which is heat-sealable as claimed in any one of the preceding claims, **characterized in that** it comprises a nonwoven fibrous single-layer substrate or paper impregnated to the core with at least one polyurethane, for example having an activation temperature above 60°C, with at least one copolymer of ethylene acrylic acid, in particular comprising between 10% and 30% of acrylic acid and having a melting point above 60%, and with at least one polyvinyl alcohol, an aqueous 4% by weight solution of which in particular has a viscosity of less than 6 mPa.s at 23°C, and which in particular has a degree of hydrolysis of greater than 95%.

13. The fibrous material for medical packaging which is heat-sealable as claimed in any one of the preceding claims, the substrate being a nonwoven fibrous substrate comprising natural, in particular cellulose-based, fibers, or synthetic fibers or else a mixture of natural and synthetic fibers.

14. The fibrous material for medical packaging which is heat-sealable as claimed in any one of the preceding claims, having a seal strength greater than 100 cN/15 mm, in particular greater than 150 cN/15 mm and preferentially greater than 175 cN/15 mm, for example of 175 cN/15 mm when measured in a T-peel test according to standard ASTM F88.

15. A process for manufacturing a fibrous material for medical packaging which is heat-sealable, in particular a fibrous packaging material as defined in any one of claims 2 to 14, comprising at least:
i. a step of sizing to the core a nonwoven fibrous single-layer substrate with a sizing composition comprising an aqueous dispersion of at least one polyurethane and at least one tackifier, and
ii. a drying step.

16. The process for manufacturing a fibrous material for medical packaging which is heat-sealable as claimed in the preceding claim, the sizing step being carried out online, in particular using a size press or a spray line or else using precipitation at the core.

17. A packaging for medical use comprising a fibrous material for medical packaging which is heat-sealable as claimed in any one of claims 1 to 14.

18. A composition for sizing a nonwoven fibrous single-layer substrate, especially for implementing the process as claimed in claim 15 or 16, comprising:
i. at least one polyurethane,
ii. at least one tackifier, especially as defined in claim 8,
iii. optionally at least one cobinding or reinforcing agent, especially as defined in claim 6,
iv. and optionally at least one functional additive, especially as defined in claim 11, in particular a polyvinyl alcohol.
